# EUROPEAN PATENT APPLICATION

(11) **EP 4 779 379 A1**
(43) Date of publication of application: **22.07.2026**
(21) Application number: 23952298.0
(22) Date of filing: 15.09.2023
(51) Int. Cl.: G02B 6/44

(54) **OPTICAL FIBER CABLE**

(71) Applicant: Sumitomo Electric Industries, Ltd., Osaka-shi, Osaka 541-0041 (JP)
(72) Inventor: SATO, Fumiaki, Osaka-shi, Osaka 541-0041 (JP); KIMURA, Toyoaki, Osaka-shi, Osaka 541-0041 (JP); SUZUKI, Yohei, Osaka-shi, Osaka 541-0041 (JP); AKIYAMA, Takemasa, Osaka-shi, Osaka 541-0041 (JP); TAKAHASHI, Ken, Osaka-shi, Osaka 541-0041 (JP)
(74) Representative: Müller-Boré & Partner Patentanwälte PartG mbB
(86) International application number: PCT/JP2023/033740
(87) International publication number: WO 2025/057409

(57) **Abstract**

This optical fiber cable comprises: a cable core (10) that contains a plurality of optical fiber cores (11); a tensile strength member (30) that is disposed along the cable core (10); and a sheath (20) that covers the cable core (10) and encloses the tensile strength member (30). The sheath (20) contains a flame-retardant material; the cable core (10) has a high flame-retardant fiber having a limiting oxygen index of at least 40; and the core density provided by dividing the number of optical fiber cores (11) by the cross-sectional area of the cable is at least 1.5 cores/mm2.

## Description

### TECHNICAL FIELD

The present disclosure relates to an optical fiber cable.

### BACKGROUND ART

Patent Literature 1 describes an optical fiber cable including a plurality of optical fibers, a sheath that covers the optical fibers, and a tensile strength member set enclosed by the sheath. The sheath includes a flame-retardant material.

### CITATION LIST

### PATENT LITERATURE

Patent Literature 1: WO2022/004666

### SUMMARY OF INVENTION

### SOLUTION TO PROBLEM

An optical fiber cable according to one aspect of the present disclosure includes:
a cable core including a plurality of optical fibers;
a tensile strength member disposed along the plurality of optical fibers; and
a sheath covering the cable core and enclosing the tensile strength member, in which the sheath includes a material having flame retardancy,
the cable core includes a high flame-retardant fiber with a limit oxygen index of 40 or more, and
a core density obtained by dividing a number of the optical fibers by a cable cross-sectional area is 1.5 core/mm² or more.

### BRIEF DESCRIPTION OF DRAWINGS

[FIG. 1] FIG. 1 is a cross-sectional view of an optical fiber cable according to the present embodiment.
[FIG. 2] FIG. 2 is a cross-sectional view of an end portion of the optical fiber cable according to the present embodiment.
[FIG. 3] FIG. 3 is a diagram illustrating a positional relationship between a tensile strength member, a cross-sectional center, and a center of rigidity in the optical fiber cable.
[FIG. 4] FIG. 4 is a diagram illustrating a bend radius of the optical fiber cable.

### DESCRIPTION OF EMBODIMENTS

### (Technical Problem)

As described in Patent Literature 1, in a slotless cable, tensile strength members may be disposed at two or more locations of a sheath. In a flame-retardant cable, an outer periphery of a cable may be coated with resin including a flame-retardant material, and when a combustible material such as the tensile strength member is disposed inside the sheath or in a cable core, it is necessary to increase a sheath thickness and expand a distance from the combustible material.

As described above, in the case of a flame-retardant slotless cable as described in Patent Literature 1, it is necessary to ensure a sufficient coating thickness, making it difficult to reduce a diameter and increase a density of an optical fiber cable.

### (Advantageous Effects of Invention)

According to the present disclosure, it is possible to provide an optical fiber cable that ensures flame retardancy and enables diameter reduction.

### (Description of Embodiments)

First, embodiments of the present disclosure will be listed and described.
(1) An optical fiber cable according to one aspect of the present disclosure includes:
   a cable core including a plurality of optical fibers;
   a tensile strength member disposed along the cable core; and
   a sheath covering the cable core and enclosing the tensile strength member, in which the sheath includes a material having flame retardancy,
   the cable core includes a high flame-retardant fiber with a limit oxygen index of 40 or more, and
   a core density obtained by dividing a number of the optical fibers by a cable cross-sectional area is 1.5 core/mm² or more.
   According to the optical fiber cable described above, since the flame-retardant material is provided to be dispersed in the cable core and the sheath, it is possible to reduce a thickness of the sheath while still ensuring the flame retardancy of the optical fiber cable, allowing diameter reduction of the optical fiber cable.
(2) In the optical fiber cable according to (1) described above,
   the tensile strength member may be disposed only at one location of the sheath.
   By disposing the tensile strength member only at one location of the sheath, a center of rigidity of the optical fiber cable is positioned near the tensile strength member. As a result, bending strain of the tensile strength member generated when bending the optical fiber cable is reduced, and buckling of the tensile strength member is reduced.
(3) In the optical fiber cable according to (1) or (2) described above,
   a distance between the tensile strength member and an outer surface of the sheath may be 0.6 mm or more.
   According to the configuration described above, since the distance between the tensile strength member and the outer surface of the sheath is 0.6 mm or more, the tensile strength member is hardly flammable. As a result, the flame retardancy of the optical fiber cable is improved.
(4) In any of the optical fiber cables (1) to (3) described above,
   the high flame-retardant fiber may be a poly-paraphenylene benzobisoxazole (PBO) fiber.
   Since the PBO fiber has excellent strength and elasticity as well as flame retardancy, it is possible to increase a bending strength of the entire optical fiber cable while ensuring the flame retardancy.
(5) In the optical fiber cable according to (1) to (4) described above,
   the cable core may include a water-absorbing fiber provided only at a center of the cable core, and
   the plurality of optical fibers may be disposed around the water-absorbing fiber.
   The plurality of optical fibers are disposed around the water-absorbing fiber disposed only at the center of the cable core. Compared to the water-absorbing tape that covers a periphery of the optical fibers, the water-absorbing fiber can improve water-absorbing property of the optical fiber cable while reducing an exclusive area of an inner core in a cross-sectional view. By disposing the flammable water-absorbing fibers at the center, flame retardancy can be improved. The term "only at the center of the cable core" means that, when a diameter of the cable core is set to r1, the water-absorbing fiber is disposed only in a range from the center of the cable core to a position of r1/2.
(6) In the optical fiber cable according to (1) to (5) described above,
   the tensile strength member may not buckle even when bent with a bending diameter that is 10 times a diameter of the optical fiber cable.
   According to the optical fiber cable described above, the optical fiber cable in which the tensile strength member hardly buckles can be obtained.
(7) In the optical fiber cable according to (1) to (6) described above,
   the sheath may include a material having flame retardancy with a limit oxygen index of 40 or more.
   Since the sheath includes the material having flame retardancy with the limit oxygen index of 40 or more, it is possible to ensure the flame retardancy also for the entire optical fiber cable.
(8) In the optical fiber cable according to (1) to (7) described above,
   a base material of the sheath may be ethylene-vinyl acetate copolymer (EVA) resin.
   Since the EVA resin has excellent elasticity and flexibility, the optical fiber cable can be bent to a smaller diameter. According to the optical fiber cable described above, the tensile strength member hardly buckles.
(9) In the optical fiber cable according to (1) to (8) described above,
   a Young's modulus of the sheath at a room temperature is 400 MPa or more and 800 MPa or less.
   By setting the Young's modulus of the sheath at the room temperature to 800 MPa or less, the sheath can be softened, an inorganic matter that is a flame-retardant material such as magnesium hydroxide can be easily dispersed, and the flame retardancy of the sheath can be improved. By setting the Young's modulus of the sheath at the room temperature to 400 MPa or more, rigidity can be ensured and generation of kinks or the like during air pressure blowing can be prevented.
(10) In the optical fiber cable according to (1) to (9) described above,
   a softening point temperature of the sheath may be in a range of 40°C or more and 70°C or less.
   By using a material of which the softening temperature of the sheath is 70°C or less, the sheath can be softened, inorganic matter that is a flame-retardant material such as magnesium hydroxide can be easily dispersed, and the flame retardancy of the sheath can be improved. By setting the softening temperature of the sheath to 40°C or more, it is possible to prevent softening of the sheath at the room temperature.
(11) In the optical fiber cable according to (1) to (10) described above,
   the optical fiber cable may be used for air pressure blowing.
   Since the optical fiber cable configured as described above can make the thickness of the sheath to be thinner while ensuring the flame retardancy, the optical fiber cable is suitable as the optical fiber cable for air pressure blowing.
(12) In the optical fiber cable according to (1) to (11) described above,
   a multi-core connector may be connected to an end portion of the optical fiber cable.

Since the multi-core connector is connected to the end portion of the optical fiber cable, connection with other optical fiber cables is facilitated.

### (Details of Embodiments of Present Disclosure)

Specific examples of an optical fiber cable according to embodiments of the present disclosure will be described below with reference to the drawings. The present invention is not limited to the examples, but is intended to be indicated by the claims, and includes all modifications within the scope and meaning equivalent to the claims.

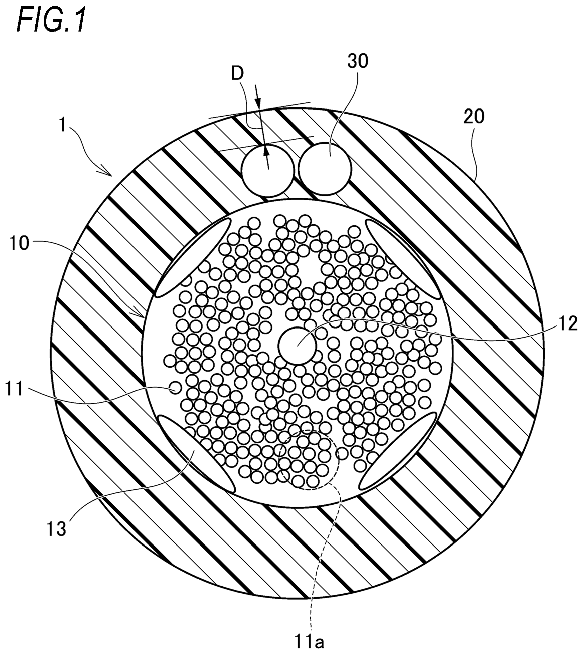

FIG. 1 is a cross-sectional view of an optical fiber cable 1. As illustrated in FIG. 1, the optical fiber cable 1 includes a cable core 10, a sheath 20, and a tensile strength member 30.

The cable core 10 includes a plurality of optical fibers 11, a water-absorbing fiber 12, and a high flame-retardant fiber 13. The optical fibers 11 of the present embodiment form an optical fiber ribbon 11a in which 12 optical fibers 11 are connected in parallel. The cable core 10 is configured with 24 optical fiber ribbons 11a, for example, and may be twisted together. In the optical fiber ribbon 11a, the optical fibers 11 adjacent to each other may be intermittently connected at a predetermined interval in a longitudinal direction of the optical fiber ribbon 11a. The optical fiber 11 may be configured as a single fiber instead of configuring the optical fiber ribbon. The optical fiber 11 includes a glass fiber provided with a core and a clad, and a resin layer covering the glass fiber. A diameter of the glass fiber is generally about 125 µm. A diameter of the optical fiber 11 is, for example, 180 µm or more and 220 µm or less, and is 200 µm in the present example.

A core density obtained by dividing the number of the optical fibers 11 by a cable cross-sectional area is 1.5 core/mm² or more. The cable cross-sectional area is a cross-sectional area of the optical fiber cable 1 including the sheath 20.

For example, the water-absorbing fiber 12 is, for example, a plastic fiber coated with an water-absorbing powder or a fiber that inherently has water-absorbing properties. The water-absorbing fibers 12 are bundled and disposed at the center of the cable core 10, and the plurality of coated optical fibers 11 are disposed around the water-absorbing fibers 12.

The high flame-retardant fiber 13 is provided inside the cable core 10. The high flame-retardant fiber 13 preferably has a limit oxygen index of 40 or more. Here, the limit oxygen index is a minimum oxygen concentration required for continuous combustion, as specified in JIS K 7201. The high flame-retardant fiber 13 may be, for example, a flame-retardant poly-paraphenylene benzobisoxazole (PBO) fiber. The high flame-retardant fiber 13 is disposed between the plurality of optical fibers 11 and the sheath 20. In the optical fiber cable 1 of the present embodiment, four high flame-retardant fibers 13 are disposed to surround the plurality of optical fibers 11.

The PBO fiber has excellent strength, elasticity, and flame retardancy, but is weak against wear. When a water-absorbing sheet is provided instead of the water-absorbing fiber 12 to cover the optical fibers 11, the water-absorbing sheet and the high flame-retardant fiber 13 may be worn. However, by providing the water-absorbing fiber 12 only at the center to be covered with the optical fibers 11, the wear of the high flame-retardant fiber 13 is prevented and the flame retardancy and the water-absorbing property of the optical fiber cable 1 are obtained.

The sheath 20 covers the cable core 10. The sheath 20 includes a material having flame retardancy. For example, the sheath 20 may include a material having flame retardancy with a limit oxygen index of 40 or more. A base material of the sheath 20 may be ethylene-vinyl acetate copolymer (EVA) resin. A Young's modulus of the sheath 20 at the room temperature may be 400 MPa or more and 800 MPa or less, and a softening point temperature of the sheath 20 may be in a range of 40°C or more and 70°C or less.

The tensile strength member 30 is disposed to be embedded in the sheath 20 along the cable core 10. In other words, the sheath 20 encloses the tensile strength member 30. The tensile strength member 30 includes, for example, fiber-reinforced plastic (FRP) or the like. Examples of the fiber-reinforced plastic include aramid FRP, glass FRP, carbon FRP, and the like. An outer diameter of the tensile strength member 30 is, for example, 1.2 mm.

In the present embodiment, two tensile strength members 30 are provided in parallel. Preferably, the tensile strength member 30 is disposed only at one location of the sheath 20. Preferably, a distance D between the tensile strength member 30 and an outer surface of the sheath 20 is provided to be 0.6 mm or more.

When the optical fiber cable 1 is bent, the tensile strength member 30 may buckle due to a bending stress, but in the optical fiber cable according to the present embodiment, it is preferable that the tensile strength member does not buckle even when bent with a bending diameter that is ten times the diameter of the optical fiber cable.

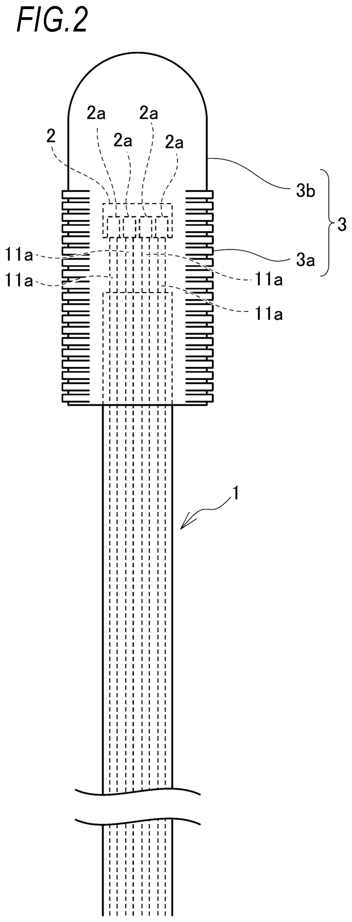

FIG. 2 illustrates an end portion of the optical fiber cable 1. A multi-core connector 2 and a protective tube 3 are connected to the end portion of the optical fiber cable 1. The multi-core connector 2 may be, for example, a 96-core or 144-core connector having an MT connector as a base structure. The multi-core connector 2 may be provided with, for example, four ferrules 2a. Each of the ferrules 2a is, for example, a 12-core MT ferrule configured to fix tips of the 12-core optical fiber ribbon 11a inserted therein.

For example, the protective tube 3 includes metal. The protective tube 3 includes a flexible part 3a having flexibility and a lid part 3b provided at the tip of the flexible part 3a. The protective tube 3 may be connected to the end portion of the optical fiber cable 1, and the optical fiber cable 1 can be laid through a pre-existing duct by air pressure blowing.

In the optical fiber cable 1 according to the present embodiment, since the flame-retardant material is provided in each of the cable core 10 and the sheath 20, compared to a case in which the flame-retardant material is included in only one side, it is possible to reduce a thickness of the sheath 20 while ensuring the flame retardancy of the optical fiber cable 1, allowing diameter reduction of the optical fiber cable 1.

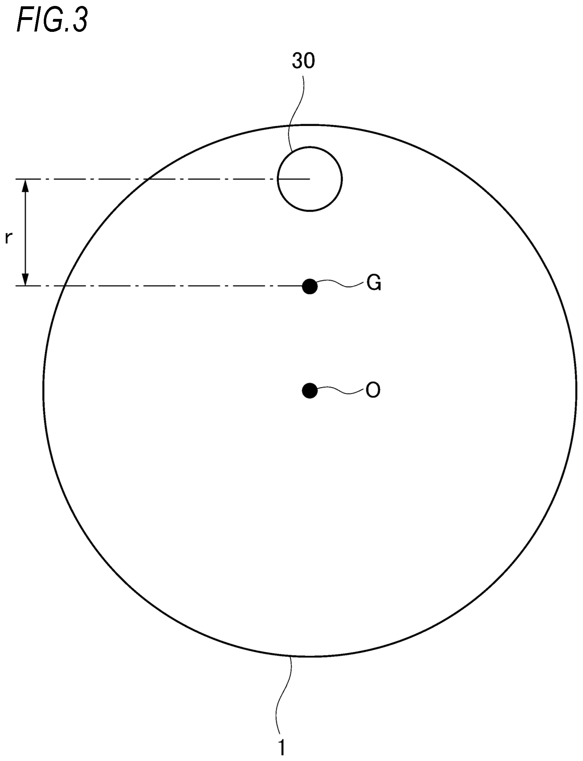

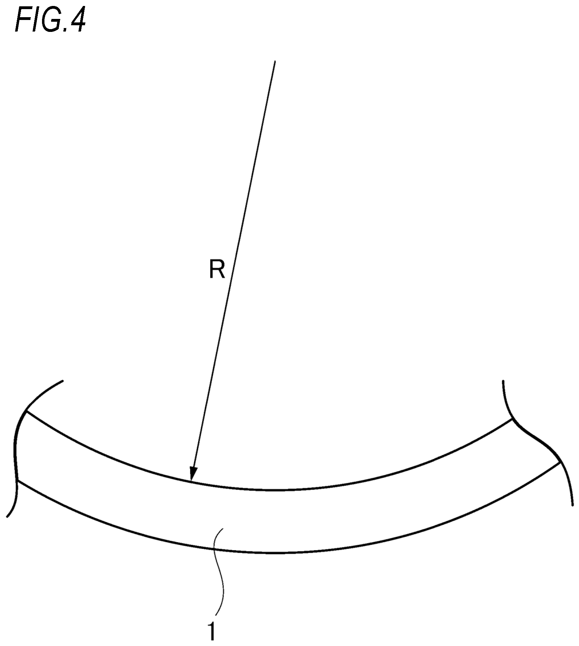

FIG. 3 illustrates a positional relationship between the tensile strength member 30, a cross-sectional center O, and a center of rigidity G in the optical fiber cable 1. FIG. 4 illustrates a bend radius R of the optical fiber cable 1.

In the optical fiber cable 1 according to the present embodiment, the tensile strength member 30 is disposed only at one location of the sheath 20. Accordingly, the center of rigidity G of the optical fiber cable 1 is positioned closer to the tensile strength member 30 than to the cross-sectional center O of the optical fiber cable 1. Meanwhile, as in Patent Literature 1, for example, when the tensile strength member is positioned at two locations sandwiching the cable core, the center of rigidity is positioned at the cross-sectional center.

When the optical fiber cable 1 is bent, the bending stress is generated in the tensile strength member 30. When the bending stress generated in the tensile strength member 30 acts as a tensile stress for the tensile strength member 30, the tensile strength member 30 may buckle.

Here, when r is a distance from the center of rigidity G to the tensile strength member 30 and R is a bend radius of the optical fiber cable 1, a bending strain ε of the tensile strength member 30 is approximately expressed as ε = r/R. That is, according to the present embodiment, the center of rigidity G of the optical fiber cable 1 is positioned closer to the tensile strength member 30 than to the cross-sectional center O of the optical fiber cable 1 such that the distance r becomes smaller and the strain ε also becomes smaller. As a result, according to the present embodiment, the tensile strength member 30 of the optical fiber cable 1 hardly buckles as compared to when the center of rigidity is at the cross-sectional center.

Since resin including the flame-retardant material is generally soft, the tensile strength member enclosed in the sheath including the flame-retardant material easily buckles. However, according to the optical fiber cable 1 of the present embodiment, the center of rigidity G of the optical fiber cable 1 is positioned closer to the tensile strength member 30 than to the cross-sectional center O of the optical fiber cable 1 such that strain ε of the optical fiber cable is reduced and the tensile strength member 30 hardly buckles.

Although the present disclosure is described in detail and with reference to the specific embodiments, it will be apparent to those skilled in the art that various changes and modifications can be made without departing from the spirit and scope of the present disclosure. The numbers, the positions, the shapes, and the like of the components described above are not limited to the embodiments described above, and can be changed to any numbers, positions, shapes, and the like suitable for implementing the present disclosure.

### REFERENCE SIGNS LIST

1: optical fiber cable
2: multi-core connector
2a: ferrule
3: protective tube
3a: flexible part
3b: lid part
10: cable core
11: optical fiber
12: water-absorbing fiber
13: high flame-retardant fiber
20: sheath
30: tensile strength member
G: center of rigidity
O: cross-sectional center
r: distance from center of rigidity to tensile strength member
R: bend radius

## Claims

1. An optical fiber cable comprising:
a cable core including a plurality of optical fibers;
a tensile strength member disposed along the cable core; and
a sheath covering the cable core and enclosing the tensile strength member, wherein
the sheath includes a material having flame retardancy,
the cable core has a high flame-retardant fiber with a limit oxygen index of 40 or more, and
a core density obtained by dividing a number of the optical fibers by a cable cross-sectional area is 1.5 core/mm² or more.

2. The optical fiber cable according to claim 1, wherein
the tensile strength member is disposed only at one location of the sheath.

3. The optical fiber cable according to claim 1 or 2, wherein
a distance between the tensile strength member and an outer surface of the sheath is 0.6 mm or more.

4. The optical fiber cable according to any one of claims 1 to 3, wherein
the high flame-retardant fiber is a poly-paraphenylene benzobisoxazole (PBO) fiber.

5. The optical fiber cable according to any one of claims 1 to 4, wherein
the cable core includes a water-absorbing fiber provided only at a center of the cable core, and
the plurality of optical fibers are disposed around the water-absorbing fiber.

6. The optical fiber cable according to any one of claims 1 to 5, wherein
the tensile strength member does not buckle even when bent with a bending diameter that is ten times a diameter of the optical fiber cable.

7. The optical fiber cable according to any one of claims 1 to 6, wherein
the sheath includes a material having flame retardancy with a limit oxygen index of 40 or more.

8. The optical fiber cable according to any one of claims 1 to 7, wherein
a base material of the sheath is ethylene-vinyl acetate copolymer (EVA) resin.

9. The optical fiber cable according to any one of claims 1 to 8, wherein
a Young's modulus of the sheath at a room temperature is 400 MPa or more and 800 MPa or less.

10. The optical fiber cable according to any one of claims 1 to 9, wherein
a softening point temperature of the sheath is in a range of 40°C or more and 70°C or less.

11. The optical fiber cable according to any one of claims 1 to 10, wherein
the optical fiber cable is used for air pressure blowing.

12. The optical fiber cable according to any one of claims 1 to 11, wherein
a multi-core connector is connected to an end portion of the optical fiber cable.
